# EUROPÄISCHE PATENTANMELDUNG

(11) **EP 4 186 827 A1**
(43) Veröffentlichungstag der Anmeldung: **31.05.2023**
(21) Anmeldenummer: 22209872.5
(22) Anmeldetag: 28.11.2022
(51) Int. Cl.: B65G 21/00

(54) **GURTBANDFÖRDERER MIT EINER SCHUTZVORRICHTUNG UND SCHUTZVORRICHTUNG FÜR EINEN GURTBANDFÖRDERER**

(30) Priorität: 29.11.2021 DE 102021131199
(71) Anmelder: T I S, Technischer Industrie-Service für Verschleiss- und Fördertechnik GmbH, 01819 Bahretal (DE)
(72) Erfinder: Strasser, Michael, 01819 Bahretal (DE)
(74) Vertreter: Riechelmann & Carlsohn Patentanwälte PartG mbB

(57) **Zusammenfassung**

Die Erfindung betrifft einen Gurtbandförderer mit einem endlosen, um Umlenkrollen (3) umlaufenden Gurtband (2) und Tragrollen (4), an denen das Gurtband (2) anliegt, wobei zumindest eine der Tragrollen (4) mit einer Schutzeinrichtung (11) ausgerüstet ist, die einen Schutzschild (12), der als erster Schutzschild bezeichnet wird, aufweist. Dabei ist vorgesehen, dass der erste Schutzschild (12) eine Oberkante (12a), die dem Gurtband (2) zugewandt ist, eine Unterkante (12b), die dem Gurtband (2) abgewandt ist, und eine Flächenseite (12c), die der Tragrolle (4) zugewandt ist, aufweist, wobei die Flächenseite (12c) des ersten Schutzschildes (12) in Richtung der Tragrolle (4) geneigt ist und die Ausdehnung der Flächenseite (12c) von der Oberkante (12a) zur Unterkante (12b) größer als der Radius der Tragrolle (4) ist.

## Beschreibung

Die Erfindung betrifft einen Gurtbandförderer. Sie betrifft ferner eine Schutzvorrichtung für einen Gurtbandförderer.

Gurtbandförderer werden in der Technik in großer Zahl zum Transport von Fördergütern eingesetzt. Allerdings sind der Betrieb, die Wartung und die Reparatur von Gurtbandförderern mit einem hohen Unfallrisiko verbunden. Solche Unfälle haben häufig schwere Verletzungen des mit der Bedienung, Wartung oder Reparatur betrauten Personals zur Folge.

Ein Gurtbandförderer, wie er aus dem Stand der Technik bekannt ist, weist eine Tragkonstruktion auf, bei der es sich in der Regel um einen Tragrahmen handelt. Die Tragkonstruktion trägt Umlenkrollen, über die ein endloses Gurtband läuft. Außerdem ist das Gurtband von Tragrollen abgestützt, die ebenfalls von der Tragkonstruktion getragen werden. Zur Verringerung der Unfallgefahr werden in DE G 88 00 535 U1 Handabweiser beschrieben, die jeweils an der Auflaufstelle angeordnet sind, an der das Gurtband auf die Tragrolle aufläuft. Die Handabweiser, die ursprünglich an der Tragkonstruktion über Halterungen und Anschläge befestigt waren, sollten DE G 88 00 535 U1 zufolge durch solche ersetzt werden, die nicht mehr über Halterungen und Anschläge, sondern an Tragrollenhaltern oder Querträgern der Tragkonstruktion befestigt sind. Die in DE G 88 00 535 U1 vorgeschlagenen Handabweiser sollten den Montageaufwand verringern. Bei dem Handabweiser soll es sich um einen brettförmigen Träger handeln, der an dem Rollenhalter befestigt ist. Die Ausdehnung des Trägers in Höhenrichtung, also senkrecht zur Unterseite des Gurtes, ist geringer als der Radius der Tragrolle.

Aus DE 20 2018 005 645 U1 sind Einrichtungen bekannten, die dem Personenschutz an Förderbandanlagen dienen sollen. Auch diese Einrichtungen sollen den Montageaufwand verringern. Die vorgeschlagenen Einrichtungen weisen jeweils zwei Formbleche auf, die an beiden Stirnseiten der Tragrolle an deren Achse befestigt werden sollen. Zwischen den beiden Formblechen ist, beabstandet von der Tragrolle und der Auflaufstelle vorgelagert, ein sogenannter Kunststoffprotektor angeordnet, wobei zwischen dem Protektor und der Mantelfläche der Tragrolle ein Spalt ausgebildet ist. Die Ausdehnung des Bleches in Höhenrichtung, also senkrecht zur Unterseite des Gurtes, entspricht annähernd dem Radius der Tragrolle.

Die aus dem Stand der Technik bekannten Einrichtungen sollen Unfälle verhindern, die sich an den Auflaufstellen des Gurtes auf die Tragrollen ereignen können. Die Gefahr von Unfällen ist jedoch nicht auf die Auflaufstellen beschränkt. Es ist daher noch immer erforderlich, eine Schutzeinrichtung bereitzustellen, die einen umfassenderen Schutz des mit der Bedienung, Wartung und Reparatur von Gurtbandförderern betrauten Personals vor Unfällen ermöglicht.

Aufgabe der Erfindung ist es, die Nachteile nach dem Stand der Technik zu beseitigen. Es soll insbesondere ein Gurtbandförderer angegeben werden, der einen verbesserten Schutz des mit der Bedienung, Wartung und/oder Reparatur von Gurtbandförderern betrauten Personals vor Unfällen bietet.

Diese Aufgabe wird durch die Merkmale der Ansprüche 1 und 14 gelöst. Zweckmäßige Ausgestaltungen der Erfindungen ergeben sich aus den Merkmalen der Unteransprüche.

Nach Maßgabe der Erfindung ist ein Gurtbandförderer mit einem endlosen, um Umlenkrollen umlaufenden Gurtband und Tragrollen, an denen das Gurtband anliegt, vorgesehen, wobei zumindest eine der Tragrollen mit einer Schutzeinrichtung ausgerüstet ist, die einen Schutzschild aufweist, wobei der erste Schutzschild eine Oberkante, die dem Gurtband zugewandt ist, eine Unterkante, die dem Gurtband abgewandt ist, und eine Flächenseite, die der Tragrolle zugewandt ist, aufweist, wobei die Flächenseite des ersten Schutzschildes in Richtung der Tragrolle geneigt ist und die Ausdehnung der Flächenseite von der Oberkante zur Unterkante größer als der Radius der Tragrolle ist. Der Schutzschild wird im Folgenden als erster Schutzschild bezeichnet. Die erfindungsgemäß vorgesehene Schutzeinrichtung ist ein Tragrollen-Einzugsschutz, vorzugsweise ein Untergurtrollen-Einzugsschutz.

Bei der Tragrolle, die mittels der erfindungsgemäß vorgesehenen Schutzeinrichtung geschützt ist, handelt es sich vorzugsweise um eine Untergurtrolle. Besonders bevorzugt sind alle Untergurtrollen jeweils mit einer solchen Schutzeinrichtung ausgerüstet. Auf Untergurtrollen liegt der zurücklaufende Teil des Gurtbandes auf. Dieser Teil des Gurtbandes wird als Untertrum bezeichnet. Untergurtrollen werden deshalb in der Fachsprache auch als Untergurt-Rücklauf-Rollen bezeichnet. Es kann aber auch vorgesehen sein, dass Tragrollen, an denen der vorwärtslaufende Teil des Gurtbandes aufliegt, mit solchen Schutzeinrichtungen ausgerüstet sind. Der vorwärtslaufende Teil des Gurtbandes wird als Obertrum, die ihn tragenden Rollen als Obertrumrollen bezeichnet.

Die erfindungsgemäß vorgesehene Schutzeinrichtung minimiert die Gefahr, dass menschliche, aber auch tierische Körperteile zwischen die rotierende Tragrolle und das Gurtband gelangen können. Nach Überzeugung des Erfinders wird sogar verhindert, dass Gegenstände oder Körperteile dorthin gelangen können. Die erfindungsgemäß vorgesehene Schutzeinrichtung ist eine Eingreifschutzvorrichtung, weil sie einen Eingriff an den rotierenden Tragrollen im Bereich des Gurtbandes verhindert. Die erfindungsgemäß vorgesehene Schutzeinrichtung wird somit aus sicherheitstechnischen Gründen bei Gurtbandförderern, vorzugsweise bei Gurtbandförderern mit Untergurtrollen, eingesetzt.

Der erste Schutzschild ist vorzugsweise, bezogen auf die Laufrichtung des Gurtbandes, vor der Auflaufstelle des Gurtbandes auf die Tragrolle angeordnet. Der erste Schutzschild ist somit bevorzugt mit seiner Oberkante gegen die Gurtlaufrichtung angeordnet.

Es kann vorgesehen sein, dass die Ausdehnung der Flächenseite des ersten Schutzschildes von der Oberkante zur Unterkante gleich dem oder größer als der Durchmesser der Tragrolle ist. Erfindungsgemäß ist vorgesehen, dass die Flächenseite des ersten Schutzschildes in Richtung der Tragrolle geneigt ist. Dabei kann ein spitzer Winkel zwischen der Flächenseite des Gurtbandes, die der Tragrolle zugewandt ist, und der Flächenseite des ersten Schutzschildes ausgebildet sein. Dieser Winkel wird im Folgenden auch als Neigungswinkel bezeichnet.

Durch die Neigung der Flächenseite des ersten Schutzschildes, die der Tragrolle zugewandt ist, ist es möglich, eine größere Schutzfläche und/oder Schutzbreite zu erreichen. Fördergut, das zwischen die Tragrolle und den ersten Schutzschild gelangt, bleibt dort nicht hängen, sondern rutscht nach unten. Eine Verstopfungsgefahr kann daher ausgeschlossen werden.

Vorzugsweise ist der erste Schutzschild ein plattenförmiger Körper. Der erste Schutzschild kann einen rechteckigen Querschnitt aufweisen. Der plattenförmige Körper kann in Richtung der Tragrolle geneigt angeordnet sein. Auf diese Weise wird eine Neigung der Flächenseite des ersten Schutzschildes, die der Tragrolle zugewandt ist, um den Neigungswinkel erreicht.

Die Oberkante des ersten Schutzschildes ist von der Flächenseite des Gurtbandes, die der Tragrolle zugewandt ist, unter Ausbildung eines ersten Spaltes beabstandet. Die Ausdehnung des ersten Spaltes zwischen der Flächenseite des Gurtbandes und der Oberkante des ersten Schutzschildes, die auch als Spaltmaß bezeichnet wird, ist vorzugsweise so dimensioniert, dass keine menschliche Gliedmaße durch diesen Spalt gelangen kann. Die Flächenseite ist von der Mantelfläche der Tragrolle unter Ausbildung eines zweiten Spaltes beabstandet. Die minimale Ausdehnung des zweiten Spaltes ist vorzugsweise ebenso dimensioniert, dass keine menschliche Gliedmaße durch diesen Spalt gelangen kann. Der erste Schutzschild ist vorzugsweise so angeordnet, dass einerseits der erste und zweite Spalt ausgebildet sind und dass andererseits der Abstand zwischen der Oberkante des ersten Schutzschildes und der Auflaufstelle, an der das Gurtband in Kontakt mit der Tragrolle gelangt, möglichst gering ist.

Vorzugsweise weist die Schutzeinrichtung zwei sich gegenüberliegende Trägerelemente auf, zwischen denen die Tragrolle angeordnet ist und zwischen denen sich der erste Schutzschild erstreckt. Die beiden Trägerelemente können die Seitenteile der erfindungsgemäß vorgesehenen Schutzeinrichtung bilden. Die beiden Trägerelemente halten den ersten Schutzschild. Sie können einen Einzug und insbesondere einen Eingriff von der Seite verhindern.

Die beiden Trägerelemente der Schutzeinrichtung können an einer Tragkonstruktion des erfindungsgemäßen Gurtbandförderers, an der die Tragrollen gelagert sind, lösbar befestigt sein. Die beiden Trägerelemente können sich gegenüberliegende schlitzförmige Öffnungen aufweisen, durch die der erste Schutzschild geführt ist und über die der erste Schutzschild unter Ausbildung des ersten Spaltes zwischen der Flächenseite des Gurtbandes und der Oberkante des ersten Schutzschildes einerseits und unter Ausbildung des zweiten Spaltes zwischen seiner Flächenseite und der Mantelfläche der Tragrolle andererseits gehalten ist.

Es kann vorgesehen sein, dass die Schutzeinrichtung einen zweiten Schutzschild aufweist. Der zweite Schutzschild ist vorzugsweise zwischen den beiden sich gegenüberliegenden Trägerelementen angeordnet, wobei die Tragrolle zwischen dem ersten Schutzschild und dem zweiten Schutzschild angeordnet ist. Vorzugsweise liegt der zweite Schutzschild dem ersten Schutzschild, bezogen auf die Laufrichtung des Untertrums, gegenüber. Es kann vorgesehen sein, dass der zweite Schutzschild spiegelsymmetrisch, bezogen auf eine Symmetrieebene, die sich orthogonal zur Flächenseite des Gurtbandes erstreckt und auf der die Drehachse der Tragrolle liegt, ausgebildet ist. Ein Gurtbandförderer, der in beide Richtungen laufen kann, wird als Reversierband bezeichnet.

Sind zwei Schutzschilde vorgesehen, so ist es bevorzugt, wenn zwischen der Unterkante des ersten Schutzschildes und der Unterkante des zweiten Schutzschildes ein Spalt ausgebildet ist. Dieser Spalt wird als dritter Spalt bezeichnet. Der dritte Spalt ermöglicht es, dass Fördergut, das zwischen die Tragrolle und einen der beiden Schutzschilde gelangt, dort nicht hängenbleibt, sondern durch den dritten Spalt hindurchtreten kann. An der Ablaufstelle des Untergurtes besteht keine Einzugsgefahr.

Der zweite Schutzschild kann als Ersatzschild für den ersten Schutzschild dienen. Er kann den ersten Schutzschild ersetzen, indem er anstelle des ersten Schutzschildes montiert wird. Ändert sich jedoch die Laufrichtung des Untertrums, so übernimmt der zweite Schutzschild die Funktion des ersten Schutzschildes. Der zweite Schutzschild ist somit vorzugsweise, bezogen auf die - ursprüngliche - Laufrichtung des Gurtbandes, nach der Auflaufstelle des Gurtbandes auf die Tragrolle angeordnet.

Es kann vorgesehen sein, dass die beiden Trägerelemente der Schutzeinrichtung sich gegenüberliegende schlitzförmige Öffnungen aufweisen, durch die der zweite Schutzschild geführt ist und über die der zweite Schutzschild unter Ausbildung des ersten Spaltes zwischen der Flächenseite des Gurtbandes und der Oberkante des zweiten Schutzschildes einerseits und unter Ausbildung des zweiten Spaltes zwischen seiner Flächenseite, die der Mantelfläche der Tragrolle zugewandt ist, und der Mantelfläche der Tragrolle andererseits gehalten ist.

Die erfindungsgemäß vorgesehene Schutzeinrichtung ist aufgrund ihres Aufbaues stabil und bruchsicher. Sie gewährleistet dennoch einen leichten Zugang zu der Tragrolle und der Flächenseite des Gurtbandes, die auf der Tragrolle aufliegt, für Wartungs- und Reinigungszwecke. Die erfindungsgemäß vorgesehene Schutzeinrichtung bietet den Vorteil, dass sie eine sehr einfache Anpassung an verschiedenste Gurtbandförderer ermöglicht. Dazu ist es nur erforderlich, die Maße des ersten Schutzschildes und, falls vorgesehen, des zweiten Schutzschildes, an die jeweilige Größe der Tragrolle, insbesondere der Untergurtrolle, anzupassen.

In einer bevorzugten Ausführungsform bestehen der erste Schutzschild und/oder der zweite Schutzschild aus einem Material, das eine Dichte aufweist, die in einem Bereich von 0,8 g/cm³ bis 5 kg/cm³ liegt. Vorzugsweise liegt die Dichte des Materials in einem Bereich von 0,9 g/cm³ bis 1,0 kg/cm³, besonders bevorzugt beträgt sie 0,96 g/cm³. Gegenüber einem Schutzschild aus Stahl, der eine Dichte von ca. 7,87 g/cm³ aufweist, weist ein erfindungsgemäß vorgesehener Schutzschild somit eine geringere Dichte auf. Dadurch ist es möglich, eine Schutzeinrichtung für eine Tragrolle bereitzustellen, die leichter und umweltfreundlicher ist. Das gilt auch für einen Gurtbandförderer, der eine oder mehrerer solcher Schutzeinrichtungen aufweist.

In einer bevorzugte Ausführungsform bestehen der erste Schutzschild und/oder der zweite Schutzschild aus einem Material, das eine oder mehrere, bevorzugt alle der folgenden Eigenschaften besitzt: eine Hitzebeständigkeit bis 750 °C, Öl- und Fettbeständigkeit und Lebensmittelechtheit. Außerdem sollte das Material so gewählt sein, dass die Verletzungsgefahr bei einem möglichen Kontakt mit der erfindungsgemäß vorgesehenen Schutzeinrichtung möglichst verringert wird.

Vorzugsweise handelt es sich bei dem Material, aus dem der erste Schutzschild und/oder der zweite Schutzschild bestehen, um einen Kunststoff, beispielsweise um Polyethylen. Dieses Material weist die Eigenschaften auf, die in den beiden vorhergehenden Absätzen beschrieben sind. Vorzugsweise besteht die gesamte Schutzeinrichtung aus diesem Kunststoff.

Vorzugsweise bestehen die Schutzschilde aller Schutzeinrichtungen des erfindungsgemäßen Gurtbandförderers aus demselben Material. Die Trägerelemente der Schutzeinrichtung bestehen vorzugsweise aus demselben Material wie der oder die ersten Schutzschilde. Das Material, aus dem der Schutzschild und, falls vorgesehen, auch die Trägerelemente bestehen, sorgt zusätzlich für eine stabile und bruchsichere Ausführung des Bauteils.

In einer Ausführungsform der Erfindung ist vorgesehen, dass der erste Schutzschild eine Gummilippe aufweist, die an der Oberkante des ersten Schutzschildes angeordnet ist. Alternativ oder zusätzlich kann vorgesehen sein, dass der zweite Schutzschild eine Gummilippe aufweist, die an der Oberkante des zweiten Schutzschildes angeordnet ist. Die Gummilippe erstreckt sich in den ersten Spalt. Sie kann an der Flächenseite des Gurtbandes, die der Tragrolle zugewandt ist, anliegen. Mittels der Gummilippe kann das Spaltmaß des ersten Spaltes verringert werden. Bei der Gummilippe kann es sich um ein Verschließteil handeln. Die Gummilippe ist leicht anpassbar, beispielsweise zuschneidbar. Sie kann insbesondere an die Ausdehnung des ersten Spaltes angepasst werden. Die Befestigung der Gummilippe an dem ersten oder zweiten Schutzschild kann über eine formschlüssige Verbindung erfolgen. Vorzugsweise ist die Gummilippe über eine Schwalbenschwanz-Verbindung an dem ersten oder zweiten Schutzschild befestigt.

Die erfindungsgemäß vorgesehene Schutzeinrichtung bietet insbesondere erhöhte Arbeitssicherheit für die Personen, die den erfindungsgemäßen Gurtbandförderer bedienen, und Personen, die den erfindungsgemäßen Gurtbandförderer reinigen. Außerdem schützen sie die Tragrollen, insbesondere die Untergurtrollen, die die erfindungsgemäß vorgesehene Schutzeinrichtung aufweisen, durch eine erleichterte Wartung und Reparatur. Gurtbandförderer, deren Untertragrollen mit den erfindungsgemäß vorgesehenen Schutzeinrichtungen ausgerüstet sind, stehen in Übereinstimmung mit den Vorschriften der Berufsgenossenschaft und den Unfallverhütungsvorschriften. Das in diesen Vorschriften beschriebene Sicherheitskonzept wird umgesetzt, indem alle Untergurtrollen eines Gurtbandförderers mit den erfindungsgemäß vorgesehenen Schutzeinrichtungen ausgerüstet sind.

Die aus dem Stand der Technik bekannten Untergurtrollen werden bereits aus Gründen des Arbeitsschutzes aus diversen Konstruktionen aus Stahl, Lochblech, Welldrahtgitter oder Gummi-Kunststoff-Stahl-Kombinationen mit Winkeleisen hergestellt. Außerdem werden bekannte Untergurtrollen-Eingreifschutzvorrichtungen wegen ihrer starken Beanspruchung durch bestimmte Fördergüter, wie z. B. abrasive Schüttgüter, mit einem Korrosionsschutz versehen. Bei einem solchen Korrosionsschutz kann es sich beispielsweise um eine Lackierung oder Verzinkung handeln. Besteht die erfindungsgemäß vorgesehene Schutzeinrichtung hingegen aus Kunststoff, so ist ein Korrosionsschutz nicht erforderlich.

Die erfindungsgemäß vorgesehene Schutzeinrichtung kann als Baukastensystem ausgebildet sein. Verschiedene Baugrößen für unterschiedliche Tragrollen sind leicht herzustellen. Es ist lediglich erforderlich, den ersten Schutzschild, und falls vorgesehen, den zweiten Schutzschild, durch entsprechende Dimensionierung an die geforderte Konstruktionsbreite anzupassen. Die Trägerelemente können in der Mehrzahl der Fälle baugleich ausgeführt werden. Durch das Baukastensystem, das den ersten Schutzschild, die beiden Trägerelemente und, falls vorgesehen, den zweiten Schutzschild zur Ausbildung der Schutzeinrichtung aufweisen kann, ist eine einfache und schnelle Montage möglich. Die Trägerelemente sind bei der Montage vorzugsweise in der Höhe einstellbar. Dazu können sie beispielsweise Langlöcher aufweisen. Mittels der Langlöcher können die Trägerelemente lösbar an der Tragkonstruktion des Gurtbandförderers befestigt werden.

Nach Maßgabe der Erfindung ist ferner eine Schutzeinrichtung für eine Tragrolle eines Gurtbandförderers vorgesehen, wobei die Schutzeinrichtung einen Schutzschild, der als erster Schutzschild bezeichnet wird, und zwei sich gegenüberliegende Trägerelemente zur Befestigung an dem Gurtbandförderer aufweist, wobei die beiden Trägerelemente der Schutzeinrichtung sich gegenüberliegende schlitzförmige Öffnungen zur Durchführung des ersten Schutzschildes aufweisen. Es kann vorgesehen sein, dass die erfindungsgemäße Schutzeinrichtung einen zweiten Schutzschild aufweist, wobei die Trägerelemente zwei weitere sich gegenüberliegende schlitzförmige Öffnungen zur Durchführung des zweiten Schutzschildes aufweisen. Zur weiteren Erhöhung der Arbeitssicherheit können der erste Schutzschild und, falls vorgesehen, der zweite Schutzschild, mit einer Signalfarbe, beispielsweise Signalgelb, gefärbt sein. Auch die beiden Trägerelemente können mit einer Signalfarbe, beispielsweise Signalgelb, gefärbt sein. Zusätzlich können auf der erfindungsgemäß vorgesehenen Schutzeinrichtung Aufkleber und Warnhinweise angebracht sein, die auf die schützende Funktion der Schutzeinrichtung aufmerksam machen.

Die erfindungsgemäße Schutzeinrichtung ist insbesondere als Schutzeinrichtung für Untergurtrollen geeignet. Sie ist deshalb ein Untergurtrollen-Einzugsschutz.

Weitere Merkmale der erfindungsgemäßen Schutzeinrichtung sind bereits im Zusammenhang mit dem erfindungsgemäßen Gurtbandförderer beschriebenen worden. Auf diese Erläuterungen wird verwiesen.

Die Erfindung wird nachstehend anhand von Ausführungsbeispielen, die die Erfindung nicht einschränken sollen, unter Bezugnahme auf die Zeichnungen näher erläutert. Dabei zeigen
- Fig. 1: eine schematische Schnittdarstellung eines erfindungsgemäßen Gurtbandförderers, dessen Gurtband in Laufrichtung F läuft, wobei der Gurtbandför-derer Untergurtrollen aufweist und jeweils nur der erste Schutzschild an jeder der Untergurtrollen gezeigt ist;
- Fig. 1A: eine schematische Schnittdarstellung eines erfindungsgemäßen Gurtbandförderers, dessen Gurtband in Laufrichtung F oder entgegengesetzt dazu in Laufrichtung F' läuft, wobei der Gurtbandförderer Untergurtrollen aufweist und jeweils nur der erste und zweite Schutzschild an jeder der Untergurtrollen gezeigt ist;
- Fig. 2: eine schematische Schnittdarstellung des erfindungsgemäßen Gurtbandförderers quer zur Laufrichtung, wobei eine Untergurtrolle mit der Tragkonstruktion und den Trägerelementen gezeigt ist;
- Fig. 3: eine schematische Detaildarstellung eines Ausschnittes eines erfindungsgemäßen Gurtbandförderers, wobei eine Untergurtrolle zusammen mit dem ersten Schutzschild gezeigt ist;
- Fig. 3A: eine schematische Detaildarstellung eines Ausschnittes eines erfindungsgemäßen Gurtbandförderers, wobei eine Untergurtrolle zusammen mit dem ersten Schutzschild und einem zweiten Schutzschild gezeigt ist;
- Fig. 4: eine schematische Darstellung einer ersten Ausführungsform einer erfindungsgemäßen Schutzeinrichtung (Fig. 4A: perspektivische Darstellung; Fig. 4B von oben, Fig. 4C: Ansicht von vorn; Fig. 4D: Seitenansicht; Fig. 4E: erstes Trägerelement in Draufsicht und Seitenansicht; Fig. 4F: zweites Trägerelement in Draufsicht und Seitenansicht; Fig. 4G: erster Schutzschild in Draufsicht und Seitenansicht);
- Fig. 5: eine schematische Darstellung einer zweiten Ausführungsform einer erfindungsgemäßen Schutzeinrichtung (Fig. 5A: perspektivische Darstellung; Fig. 5B von oben, Fig. 5C: Ansicht von vorn; Fig. 5D: Seitenansicht); und
- Fig. 6: eine schematische Darstellung einer dritten Ausführungsform einer erfindungsgemäßen Schutzeinrichtung (Fig. 6A: perspektivische Darstellung; Fig. 6B von oben, Fig. 6C: Ansicht von vorn; Fig. 6D: Seitenansicht; Fig. 6E: Trägerelement in Draufsicht und Seitenansicht; Fig. 6F: zweiter Schutzschild in Draufsicht und Seitenansicht).

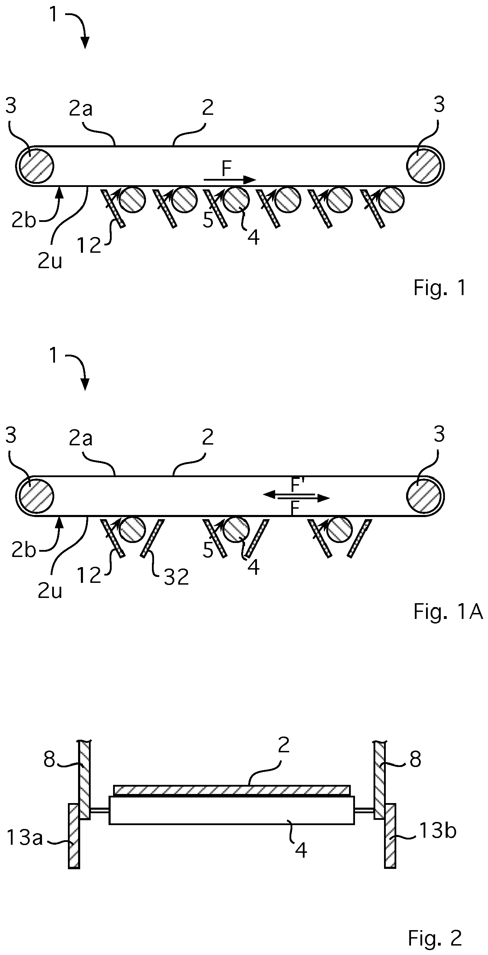

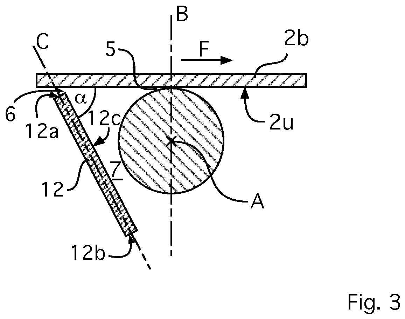

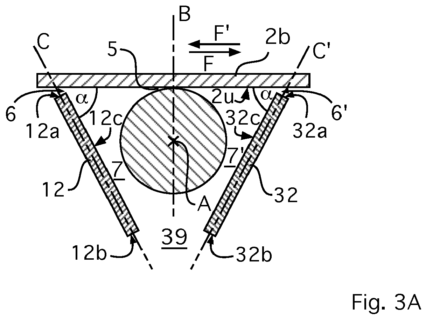

Die in den Figuren 1 und 2 gezeigte Ausführungsform eines Gurtbandförderers 1 weist ein endloses Gurtband 2 auf, das zwischen zwei Umlenkrollen 3 umläuft. Das Gurtband weist einen Obertrum 2a zum Transport des Fördergutes und einen Untertrum 2b auf, der mit einer Flächenseite 2u auf Tragrollen, bei denen es sich um Untergurtrollen 4 handelt und die voneinander beanstandet sind, aufliegt. Eine der Umlenkrollen 3 kann mittels eines Antriebs (nicht gezeigt) angetrieben sein. Die Laufrichtung des Untertrums 2b ist durch Pfeil F gekennzeichnet. Der Untertrum 2b läuft an den Auflaufstellen 5 auf die Untergurtrollen 4 auf. Bezogen auf die Laufrichtung F des Untertrums 2b sind die erfindungsgemäß vorgesehenen ersten Schutzschilde 12 vor den Auflaufstellen 5 angeordnet, d. h. der Untertrum 2b passiert erst den ersten Schutzschild 12, bevor er auf die Untergurtrolle 4 trifft, an der er angeordnet ist. Die Untergurtrollen 4 sind an einer Tragkonstruktion 8 um eine Drehachse A drehbar gelagert (siehe Figuren 2 und 3).

An jeder Untergurtrolle 4 ist eine Schutzeinrichtung 11 angeordnet, die einen Einzugs- und insbesondere einen Eingriffschutz darstellt. Jede der Schutzeinrichtungen 11 weist einen ersten Schutzschild 12 auf, der zwischen zwei Trägerelementen 13a, 13b angeordnet ist. Die beiden Trägerelemente 13a, 13b liegen einander derart gegenüber, dass die Untergurtrolle 4 zwischen ihnen liegt (siehe Fig. 2). Dabei sind die beiden Trägerelemente 13a, 13b an der Tragkonstruktion 8 lösbar befestigt, beispielsweise über Langlöcher 14. Die beiden Trägerelemente 13a, 13b halten den ersten Schutzschild 12 derart, dass zwischen der Oberkante 12a und der Flächenseite 2u des Untertrums 2b der erste Spalt 6 und zwischen der Flächenseite 12c des ersten Schutzschildes 12, die der Untergurtrolle 4 zugewandt ist, und der Mantelfläche der Untergurtrolle 4 der zweite Spalt 7 ausgebildet ist (siehe Fig. 3). Dazu ist der erste Schutzschild in Richtung der Untergurtrolle 4 geneigt, wodurch der Neigungswinkel α zwischen der Flächenseite 2u des Untertrums 2b und der Flächenseite 12c des ersten Schutzschildes ausgebildet ist.

Der erste Schutzschild 12 ist ein plattenförmiger Körper mit rechteckigem Querschnitt. Die Erstreckungsrichtung C des plattenförmigen Körpers ist zur Laufrichtung F des Untertrums 2b geneigt, wobei die Oberkante 12a des ersten Schutzschildes 12 von einer Ebene B, die orthogonal zur Flächenseite 2u des Untertrums 2b verläuft und auf der die Drehachse A der Untergurtrolle 4 liegt, stärker beabstandet ist als die Unterkante 12b des ersten Schutzschildes 12. Es ist in Fig. 3 zu erkennen, dass der erste Schutzschild 12 derart an der Untergurtrolle 4 angeordnet ist, dass die Ausdehnung des ersten Spaltes 6 zwischen der Oberkante 12a und der Flächenseite 2u des Untertrums 2b und die Ausdehnung des zweiten Spaltes 7 zwischen der Flächenseite 12c des ersten Schutzschildes 12, die der Untergurtrolle 4 zugewandt ist, und der Mantelfläche der Untergurtrolle 4 einen Eingriff nicht zulassen. Der Einzug einer menschlichen Gliedmaße wird dadurch wirksam verhindert.

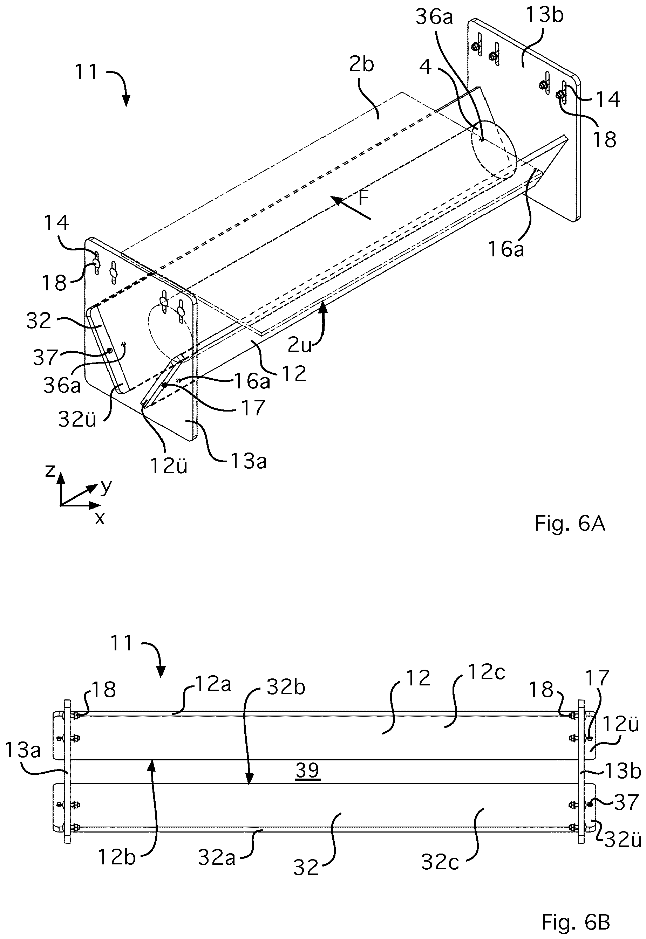

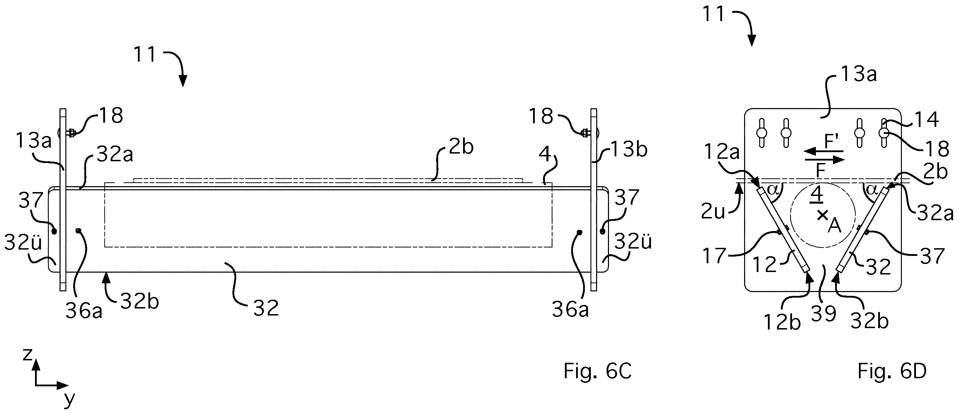

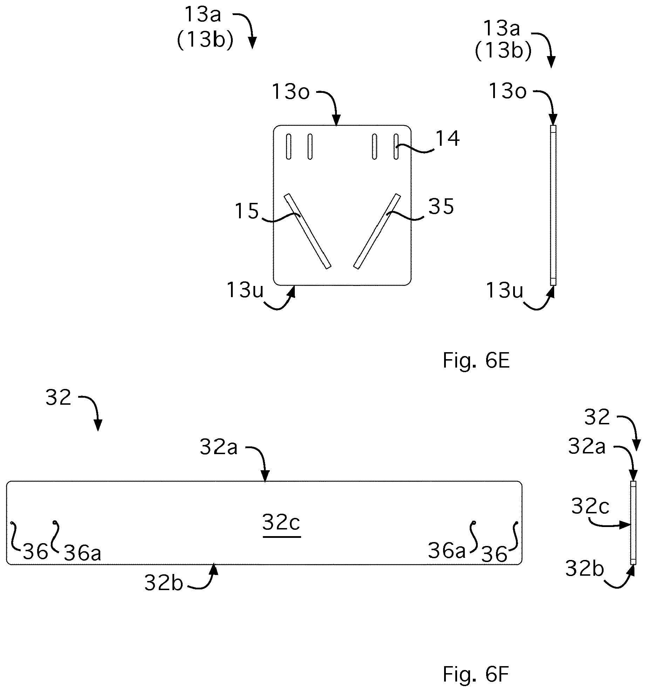

Bei der in Fig. 1A gezeigten Ausführungsform eines erfindungsgemäßen Gurtbandförderers handelt es sich um ein Reversierband, d. h., der Untertrum 2b des Gurtbandes 2 kann sich in Laufrichtung F oder entgegengesetzt dazu in Laufrichtung F' bewegen. Aus diesem Grund ist an jeder der Untergurtrollen 4 ein zweiter Schutzschild 32 vorgesehen. Im Übrigen entspricht die in Fig. 1A gezeigte Ausführungsform eines erfindungsgemäßen Gurtbandförderers der in den Figuren 1 und 2 gezeigten Ausführungsform. Einzelheiten zu dem Reversierband werden nachstehend im Zusammenhang mit den Figuren 3A und 6 erläutert.

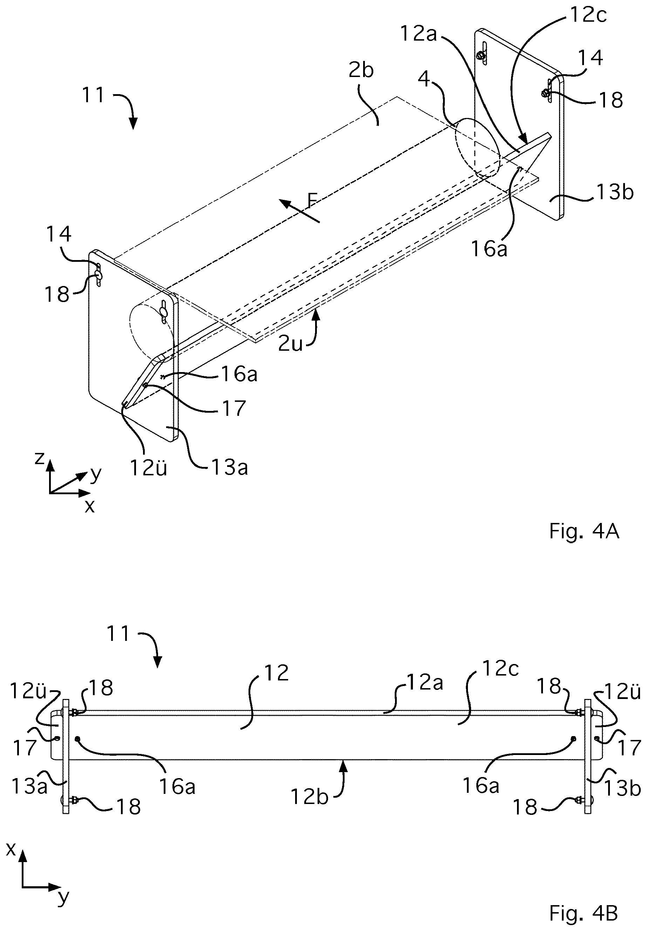

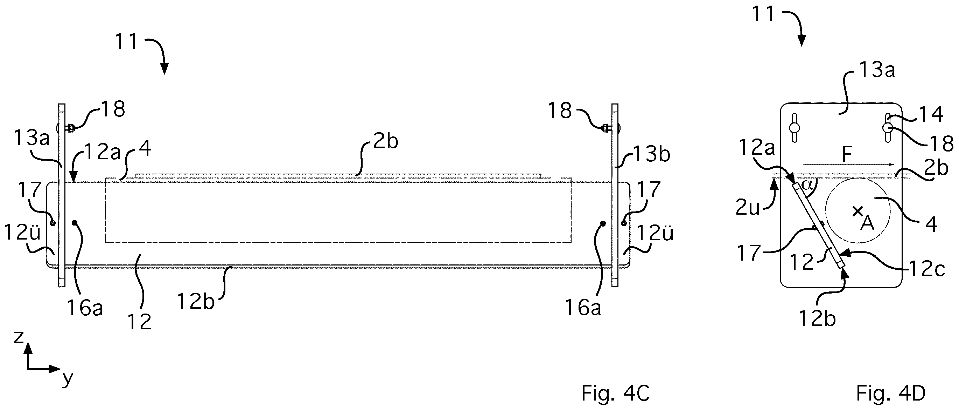

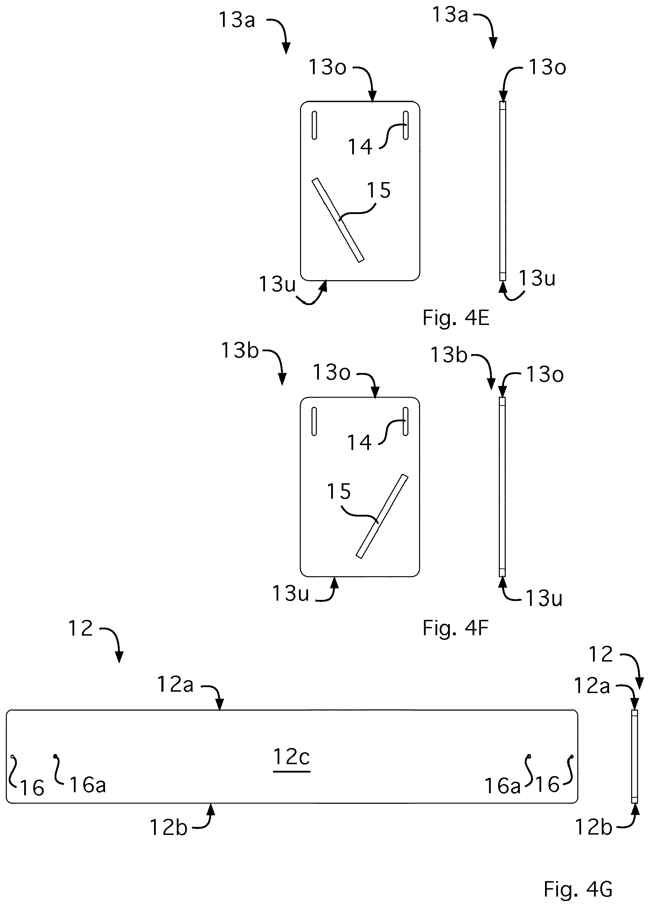

Mit Bezug auf die Figuren 4, 5 und 6 wird die erfindungsgemäß vorgesehene Schutzeinrichtung 11 weiter erläutert. Die Figuren 4, 5 und 6 zeigen Ausführungsformen der Schutzeinrichtung 11 zur Montage an die Tragkonstruktion 8 unter Erhalt eines erfindungsgemäßen Gurtbandförderers 1. In den Figuren 4A, 4C, 4D, 5A, 5C, 5D und 6A, 6C, 6D sind jeweils ein Teil des Untertrums 2b und die Untergurtrolle 4, auf der der Teil des Untertrums 2b mit seiner Flächenseite 2u aufliegt, des Gurtbandförderers 1 gezeigt.

Die in Fig. 4 gezeigte erste Ausführungsform einer erfindungsgemäßen Schutzeinrichtung 11 weist einen ersten Schutzschild 12, ein erstes Trägerelement 13a und ein zweites Trägerelement 13b auf. Der erste Schutzschild 12 ist ein plattenförmiger Körper mit einer Oberkante 12a, einer Unterkante 12b, die parallel zur Oberkante 12a verläuft, und einer Flächenseite 12c, die die Oberkante 12a mit der Unterkante 12b verbindet und die nach Montage der Schutzeinrichtung 11 dem Mantel der Untergurtrolle 4 zugewandt ist (siehe insbesondere Figuren 4G und 4A). Der erste Schutzschild 12 wird von einem ersten Trägerelement 13a und einem zweiten Trägerelement 13b gehalten. Die beiden Trägerelemente 13a, 13b sind an der Tragkonstruktion 8 derart befestigt, dass die Untergurtrolle 4 zwischen ihnen liegt. Dazu weisen die Trägerelemente 13a, 13b jeweils zwei Langlöcher 14 auf, die jeweils voneinander beabstandet in einem ersten Bereich ausgebildet sind, der an die Oberkante 13o des jeweiligen Trägerelementes 13a, 13b angrenzt (siehe Figuren 4E und 4F). Bei beiden Trägerelementen 13a, 13b grenzt an den ersten Bereich ein zweiter Bereich an, in dem eine schlitzförmige Öffnung 15 ausgebildet ist. Die schlitzförmige Öffnung 15 erstreckt sich dabei in Richtung der Unterkante 13u der jeweiligen Trägerelemente 13a, 13b.

Die Trägerelemente 13a, 13b sind plattenförmige Körper, die die Seitenteile der Schutzeinrichtung 11 bilden. Die Oberkante 13o eines Trägerelementes 13a, 13b verläuft jeweils parallel zur Unterkante 13u. Die schlitzförmige Öffnung 15 ist dabei geneigt zur Oberkante 13o ausgebildet. Diese Neigung der schlitzförmigen Öffnung 15 entspricht dem Neigungswinkel α, mit dem der erste Schutzschild 12 nach Montage der Schutzeinrichtung 11 angeordnet ist (Fig. 3).

Sind die beiden Trägerelemente 13a, 13b an der Tragkonstruktion 8, beispielsweise mittels Schrauben 18, befestigt, so liegen sich die schlitzförmige Öffnung 15, die in dem ersten Trägerelement 13a ausgebildet ist, und die schlitzförmige Öffnung 15, die in dem zweiten Trägerelement 13b ausgebildet ist, fluchtend gegenüber. Durch die beiden schlitzförmigen Öffnungen 15 ist der erste Schutzschild 12 geführt. Die Lage der schlitzförmigen Öffnungen 15 in den zweiten Bereichen der beiden Trägerelementen 13a, 13b bestimmt dabei die Lage des ersten Schutzschildes 12 in Bezug auf die Untergurtrolle 4, insbesondere die Neigung der Flächenseite 12c des ersten Schutzschildes 12, die Ausdehnung des ersten Spaltes 6 und die Ausdehnung des zweiten Spaltes 7. Es ist insbesondere in den Figuren 4A, 4B und 4C zu erkennen, dass der erste Schutzschild 12 sich von dem ersten Trägerelement 13a bis zu dem zweiten Trägerelement 13b erstreckt. Auf diese Weise wird ein Einzugs- und insbesondere ein Eingriffschutz über die gesamte Breite des Gurtbandförderers 1 erreicht. Es ist in den Figuren 4A, 4B und 4C weiter zu erkennen, dass der erste Schutzschild 12 an der Flächenseite des Trägerelementes 13a, die einer Stirnseite der Untergurtrolle 4 abgewandt ist, und an der Flächenseite des Trägerelementes 13b, die der anderen Stirnseite der Untergurtrolle 4 abgewandt ist, übersteht. Zur lösbaren Fixierung des ersten Schutzschildes 12 an den Trägerelementen 13a, 13b kann in beiden überstehenden Abschnitten 12ü des ersten Schutzschildes 12 jeweils eine Bohrung 16 ausgebildet sein, durch die nach Montage des ersten Schutzschildes 12 an den Trägerelementen 13a, 13b eine Maschinenschraube 17 geführt werden kann. Die Maschinenschraube kann mittels einer Mutter in ihrer Position unter Erhalt einer Schraubverbindung fixiert werden. Die Schraubverbindung kann mittels eines Splints gesichert werden.

Zur lösbaren Fixierung des ersten Schutzschildes 12 an den Trägerelementen 13a, 13b können weitere Bohrungen 16a in dem ersten Schutzschild 12 vorgesehen sein. Auch durch diese Bohrungen 16a können Maschinenschrauben geführt werden. Beispielsweise kann eine Bohrung 16a in einem Bereich des ersten Schutzschildes 12 vorgesehen sein, der an die Innenseite des Trägerelementes 13a angrenzt. Die Innenseite des Trägerelementes 13a ist seine der Stirnseite der Untergurtrolle 4 zugewandte Seite. Die Bohrung 16a, die in diesem Bereich ausgebildet ist, ermöglicht eine Fixierung des ersten Schutzschildes 12 an den Trägerelementen 13a, 13b, selbst wenn die Bohrung 16, die im am zweiten Trägerelement 13b überstehenden Abschnitt 12ü ausgebildet ist, nicht zugänglich ist, so dass dort keine Maschinenschraube 17 eingeführt werden kann. Alternativ oder zusätzlich kann eine Bohrung 16a in einem Bereich des ersten Schutzschildes 12 vorgesehen sein, der an die Innenseite des Trägerelementes 13b angrenzt. Die Innenseite des Trägerelementes 13b ist seine der Stirnseite der Untergurtrolle 4 zugewandte Seite. Die Bohrung 16a, die in diesem Bereich ausgebildet ist, ermöglicht eine Fixierung des ersten Schutzschildes 12 an den Trägerelementen 13a, 13b, selbst wenn die Bohrung 16, die im am ersten Trägerelement 13a überstehenden Abschnitt 12ü ausgebildet ist, nicht zugänglich ist, so dass dort keine Maschinenschraube 17 eingeführt werden kann. Jede der Maschinenschrauben kann mittels einer Mutter in ihrer Position unter Erhalt einer Schraubverbindung fixiert werden. Die Schraubverbindung kann mittels eines Splints gesichert werden.

Die beiden schlitzförmigen Öffnungen 15 sind vorzugsweise so ausgebildet, dass der erste Schutzschild 12 in die schlitzförmigen Öffnungen 15 unter Herstellung von Formschluss eingesteckt werden kann.

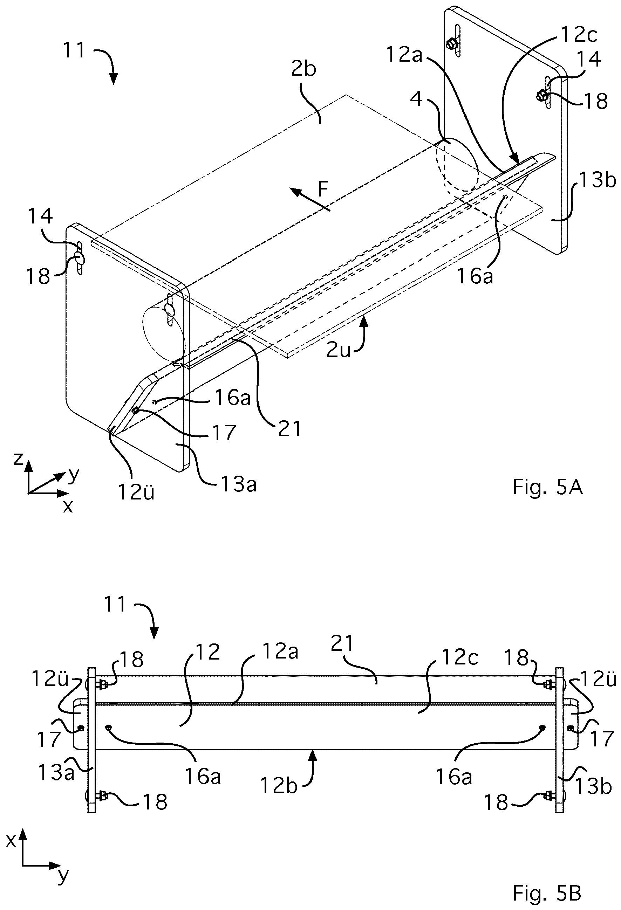

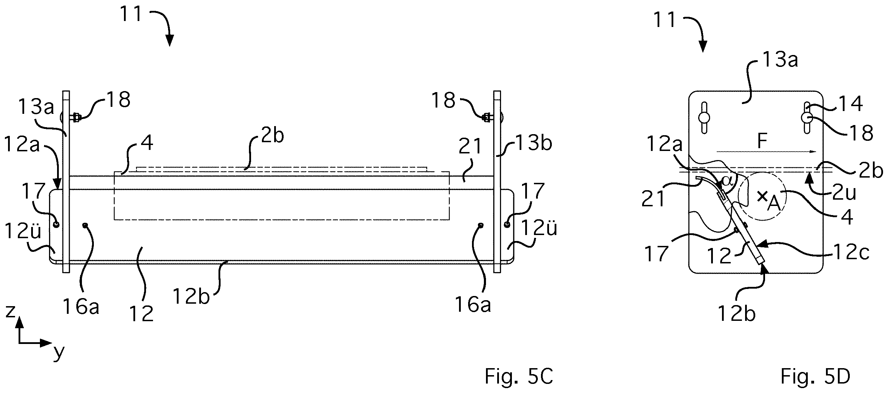

Die in Fig. 5 gezeigte zweite Ausführungsform einer Schutzeinrichtung 11 entspricht der ersten Ausführungsform, außer dass zusätzlich an der Oberkante 12a des ersten Schutzschildes 12 eine Gummilippe 21 befestigt ist, die sich von dem ersten Trägerelement 13a bis zum zweiten Trägerelement 13b erstreckt. Die Gummilippe 21 verringert die Ausdehnung des ersten Spaltes 6.

Die in Fig. 6 gezeigte zweite Ausführungsform einer Schutzeinrichtung 11 entspricht der ersten Ausführungsform, außer dass zusätzlich ein zweiter Schutzschild 32 vorgesehen ist und die beiden Trägerelemente 13a, 13b weitere schlitzförmige Öffnungen 35 zur Durchführung des zweiten Schutzschildes 32 aufweisen. Der zweite Schutzschild 32 kann als potentieller Ersatz für den ersten Schutzschild 12 dienen. Bewegt sich der Untertrum 2b in entgegengesetzter Richtung zu Pfeil F, so übernimmt der zweite Schutzschild die Funktion des ersten Schutzschildes. Die entgegengesetzte Richtung zu Pfeil F ist mit Pfeil F' gekennzeichnet.

Der zweite Schutzschild 32 entspricht, abgesehen von seiner Anordnung in der Schutzeinrichtung 11, dem ersten Schutzschild 12. Der zweite Schutzschild 32 ist ein plattenförmiger Körper mit einer Oberkante 32a, einer Unterkante 32b, die parallel zur Oberkante 32a verläuft, und einer Flächenseite 32c, die die Oberkante 32a mit der Unterkante 32b verbindet und die nach Montage der Schutzeinrichtung 11 dem Mantel der Untergurtrolle 4 zugewandt ist (siehe insbesondere Figuren 6F und 6A). Der zweite Schutzschild 32 wird ebenso wie der erste Schutzschild 12 von dem ersten Trägerelement 13a und dem zweiten Trägerelement 13b gehalten. Die beiden Trägerelemente 13a, 13b gleichen einander. Sie sind an der Tragkonstruktion 8 derart befestigt, dass die Untergurtrolle 4 zwischen ihnen liegt. Dazu weisen die Trägerelemente 13a, 13b jeweils vier Langlöcher 14 auf, die jeweils voneinander beabstandet in einem ersten Bereich ausgebildet sind, der an die Oberkante 13o der jeweiligen Trägerelemente 13a, 13b angrenzt (siehe Fig. 6E). Bei beiden Trägerelementen 13a, 13b grenzt an den ersten Bereich ein zweiter Bereich an, in dem eine schlitzförmiger Öffnung 15 zur Durchführung des ersten Schutzschildes 12 und eine schlitzförmige Öffnung 35 zur Durchführung des zweiten Schutzschildes 32 ausgebildet ist. Die schlitzförmige Öffnung 35 erstreckt sich dabei in Richtung der Unterkante 13u des jeweiligen Trägerelementes 13a, 13b, und zwar spiegelsymmetrisch zur schlitzförmigen Öffnung 15. Symmetrieebene ist eine Ebene E, die sich orthogonal zur Flächenseite 2u des Gurtbandes 2 erstreckt und auf der die Drehachse A der Untergurtrolle 4 liegt. Die beiden schlitzförmigen Öffnungen 15, 35 des Trägerelementes 13a, 13b liegen somit auf den Schenkeln des Buchstabens "V".

Die schlitzförmige Öffnung 35 ist somit geneigt zur Oberkante 13o des Trägerelementes 13a, 13b ausgebildet. Diese Neigung der schlitzförmigen Öffnung 35 entspricht dem Neigungswinkel α', mit dem der zweite Schutzschild 32 nach Montage der Schutzeinrichtung 11 angeordnet ist (Fig. 3A).

Ist die dritte Ausführungsform der Schutzeinrichtung mittels der Trägerelementes 13a, 13b an der Tragkonstruktion 8 eines Gurtbandförderers 1 befestigt, so liegt die Untergurtrolle 4 zwischen der Flächenseite 12c des ersten Schutzschildes 12 und der Flächenseite 32c des zweiten Schutzschildes 32. Die beiden Trägerelemente 13a, 13b halten den zweiten Schutzschild 32 derart, dass zwischen der Oberkante 12a des zweiten Schutzschildes 32 und der Flächenseite 2u des Untertrums 2b ein erster Spalt 6' und zwischen der Flächenseite 32c des zweiten Schutzschildes 32, die der Untergurtrolle 4 zugewandt ist, und der Mantelfläche der Untergurtrolle 4 ein zweiter Spalt 7' ausgebildet ist (siehe Fig. 3A). Dazu ist der zweite Schutzschild 32 in Richtung der Untergurtrolle 4 geneigt, wodurch der Neigungswinkel α' zwischen der Flächenseite 2u des Untertrums 2b und der Flächenseite 32c des zweiten Schutzschildes 32 ausgebildet ist. Die Ausdehnung des ersten Spaltes 6' entspricht dabei der Ausdehnung des ersten Spaltes 6. Die Ausdehnung des zweiten Spaltes 7' entspricht dabei der Ausdehnung des zweiten Spaltes 7.

Der zweite Schutzschild 32 ist ebenso wie der erste Schutzschild 12 ein plattenförmiger Körper mit rechteckigem Querschnitt. Die Erstreckungsrichtung C' des plattenförmigen Körpers ist zur Laufrichtung F' des Untertrums 2b geneigt, wobei die Oberkante 32a des zweiten Schutzschildes 32 von einer Ebene B, die orthogonal zur Flächenseite 2u des Untertrums 2b verläuft und auf der die Drehachse A der Untergurtrolle 4 liegt, stärker beabstandet ist als die Unterkante 32b des zweiten Schutzschildes 32. Es ist in Fig. 3D zu erkennen, dass der zweite Schutzschild 32 derart an der Untergurtrolle 4 angeordnet ist, dass die Ausdehnung des ersten Spaltes 6' zwischen der Oberkante 32a und der Flächenseite 2u des Untertrums 2b und die Ausdehnung des zweiten Spaltes 7' zwischen der Flächenseite 32c des zweiten Schutzschildes 32, die der Untergurtrolle 4 zugewandt ist, und der Mantelfläche der Untergurtrolle 4 einen Eingriff nicht zulassen. Der Einzug einer menschlichen Gliedmaße wird dadurch auch wirksam verhindert, wenn der Untergurt nicht in Laufrichtung F, sondern in entgegengesetzter Richtung F' läuft.

Sind die beiden Trägerelemente 13a, 13b an der Tragkonstruktion 8, beispielsweise mittels Schrauben 18, befestigt, so liegen sich auch die schlitzförmige Öffnung 35, die in dem ersten Trägerelement 13a ausgebildet ist, und die schlitzförmige Öffnung 35, die in dem zweiten Trägerelement 13b ausgebildet ist, fluchtend gegenüber. Durch die beiden schlitzförmigen Öffnungen 35 ist der zweite Schutzschild 32 geführt. Die Lage der schlitzförmigen Öffnungen 35 in den zweiten Bereichen der beiden Trägerelemente 13a, 13b bestimmt dabei die Lage des zweiten Schutzschildes 32 in Bezug auf die Untergurtrolle 4, insbesondere die Neigung der Flächenseite 32c des zweiten Schutzschildes 32, die Ausdehnung des ersten Spaltes 6' und die Ausdehnung des zweiten Spaltes 7'. Es ist insbesondere in den Figuren 6A, 6B und 6C zu erkennen, dass der zweite Schutzschild 32 sich von dem ersten Trägerelement 13a bis zu dem zweiten Trägerelement 13b erstreckt. Auf diese Weise wird ein Einzugs- und insbesondere ein Eingriffschutz über die gesamte Breite des Gurtbandförderers 1 erreicht. Es ist in den Figuren 6A, 6B und 6C weiter zu erkennen, dass der zweite Schutzschild 32 an der Flächenseite des Trägerelementes 13a, die einer Stirnseite der Untergurtrolle 4 abgewandt ist, und an der Flächenseite des Trägerelementes 13b, die der anderen Stirnseite der Untergurtrolle 4 abgewandt ist, übersteht. Zur lösbaren Fixierung des zweiten Schutzschildes 32 an den Trägerelementen 13a, 13b kann in beiden überstehenden Abschnitten 32ü des zweiten Schutzschildes 32 jeweils eine Bohrung 36 ausgebildet sein, durch die nach Montage des zweiten Schutzschildes 32 an den Trägerelementen 13a, 13b eine Maschinenschraube 37 geführt werden kann. Die Maschinenschraube kann mittels einer Mutter in ihrer Position unter Erhalt einer Schraubverbindung fixiert werden. Die Schraubverbindung kann mittels eines Splints gesichert werden.

Zur lösbaren Fixierung des zweiten Schutzschildes 32 an den Trägerelementen 13a, 13b können weitere Bohrungen 36a in dem zweiten Schutzschild 32 vorgesehen sein. Auch durch diese Bohrungen 36a können Maschinenschrauben geführt werden. Beispielsweise kann eine Bohrung 36a in einem Bereich des zweiten Schutzschildes 32 vorgesehen sein, der an die Innenseite des Trägerelementes 13a angrenzt. Die Innenseite des Trägerelementes 13a ist seine der Stirnseite der Untergurtrolle 4 zugewandte Seite. Die Bohrung 36a, die in diesem Bereich ausgebildet ist, ermöglicht eine Fixierung des zweiten Schutzschildes 32 an den Trägerelementen 13a, 13b, selbst wenn die Bohrung 36, die im am zweiten Trägerelement 13b überstehenden Abschnitt 32ü ausgebildet ist, nicht zugänglich ist, so dass dort keine Maschinenschrauben 37 eingeführt werden kann. Alternativ oder zusätzlich kann eine Bohrung 36a in einem Bereich des zweiten Schutzschildes 32 vorgesehen sein, der an die Innenseite des Trägerelementes 13b angrenzt. Die Innenseite des Trägerelementes 13b ist seine der Stirnseite der Untergurtrolle 4 zugewandte Seite. Die Bohrung 36a, die in diesem Bereich ausgebildet ist, ermöglicht eine Fixierung des zweiten Schutzschildes 32 an den Trägerelementen 13a, 13b, selbst wenn die Bohrung 36, die im am ersten Trägerelement 13a überstehenden Abschnitt 12ü ausgebildet ist, nicht zugänglich ist, so dass dort keine Maschinenschraube 37 eingeführt werden kann. Jede der Maschinenschrauben kann mittels einer Mutter in ihrer Position unter Erhalt einer Schraubverbindung fixiert werden. Die Schraubverbindung kann mittels eines Splints gesichert werden.

Die beiden schlitzförmigen Öffnungen 35 sind vorzugsweise so ausgebildet, dass der zweite Schutzschild 32 in die schlitzförmigen Öffnungen 35 unter Herstellung von Formschluss eingesteckt werden kann.

Zwischen den beiden Unterkanten 12b, 32b der beiden Schutzschilde 12, 32 ist ein dritter Spalt 39 ausgebildet. Der Spalt 39 ermöglicht, dass Fördergut, das in den Raum zwischen der Untergurtrolle 4 und der Schutzeinrichtung 11 gelangt, aus letzterer nach unten austreten kann.

Anstelle einer Maschinenschraube, die zur lösbaren Fixierung des ersten und/oder zweiten Schutzschildes durch eine Bohrung 16, 16a, 36, 36a geführt wird, kann auch ein anderes Fixierungselement vorgesehen sein. Bei einem solchen Fixierungselement kann es sich beispielsweise um einen Bolzen oder einen Splint handeln.

### Bezugszeichenliste

- 1: Gurtbandförderer
- 2: Gurtband
- 2a: Obertrum
- 2b: Untertrum
- 2u: Flächenseite
- 3: Umlenkrolle
- 4: Untergurtrolle
- 5: Auflaufstelle
- 6: erster Spalt
- 7: zweiter Spalt
- 8: Tragkonstruktion

- 11: Schutzeinrichtung
- 12: erster Schutzschild
- 12a: Oberkante
- 12b: Unterkante
- 12c: Flächenseite
- 12ü: Überstand
- 13a: erstes Trägerelement
- 13b: zweites Trägerelement
- 13o: Oberkante
- 13u: Unterkante
- 14: Langloch
- 15: Öffnung
- 16: Bohrung
- 16a: Bohrung
- 17: Maschinenschraube
- 18: Schraube

- 21: Gummilippe
- 32: zweiter Schutzschild
- 32a: Oberkante
- 32b: Unterkante
- 32c: Flächenseite
- 32ü: Überstand
- 35: Öffnung
- 36: Bohrung
- 36a: Bohrung
- 37: Maschinenschraube
- 39: dritter Spalt

## Patentansprüche

1. Gurtbandförderer mit einem endlosen, um Umlenkrollen (3) umlaufenden Gurtband (2) und Tragrollen (4), an denen das Gurtband (2) anliegt, wobei zumindest eine der Tragrollen (4) mit einer Schutzeinrichtung (11) ausgerüstet ist, die einen Schutzschild (12), der als erster Schutzschild bezeichnet wird, aufweist, wobei der erste Schutzschild (12) eine Oberkante (12a), die dem Gurtband (2) zugewandt ist, eine Unterkante (12b), die dem Gurtband (2) abgewandt ist, und eine Flächenseite (12c), die der Tragrolle (4) zugewandt ist, aufweist, wobei die Flächenseite (2c) des ersten Schutzschildes (12) in Richtung der Tragrolle (4) geneigt ist und die Ausdehnung der Flächenseite (12c) von der Oberkante (12a) zur Unterkante (12b) größer als der Radius der Tragrolle (4) ist.

2. Gurtbandförderer nach Anspruch 1, **dadurch gekennzeichnet, dass** alle oder ein Teil der Tragrollen (4) Untergurtrollen sind.

3. Gurtbandförderer nach Anspruch 2, **dadurch gekennzeichnet, dass** jede der Untergurtrollen eine Schutzeinrichtung (11) aufweist.

4. Gurtbandförderer nach einem der vorstehenden Ansprüche, **dadurch gekennzeichnet, dass** die Ausdehnung der Flächenseite (12c) des ersten Schutzschildes (12) von der Oberkante (12a) zur Unterkante (12b) gleich dem oder größer als der Durchmesser der Tragrolle (4) ist.

5. Gurtbandförderer nach einem der vorstehenden Ansprüche, **dadurch gekennzeichnet, dass** die Flächenseite (12c) des ersten Schutzschildes (12) zu der Tragrolle (4) in einem spitzen Winkel (α), ausgebildet zwischen der Flächenseite (2u) des Gurtbandes (2), die der Tragrolle (4) zugewandt ist, und der Flächenseite (12c) des ersten Schutzschildes (12), geneigt ist.

6. Gurtbandförderer nach einem der vorstehenden Ansprüche, **dadurch gekennzeichnet, dass** der erste Schutzschild (12), bezogen auf die Laufrichtung (F) des Gurtbandes (2), vor der Auflaufstelle (5) des Gurtbandes (2) auf die Tragrolle (4) angeordnet ist.

7. Gurtbandförderer nach einem der vorstehenden Ansprüche, **dadurch gekennzeichnet, dass** die Schutzeinrichtung (11) zwei sich gegenüberliegende Trägerelemente (13a, 13b) aufweist, zwischen denen die Tragrolle (4) angeordnet ist und zwischen denen sich der erste Schutzschild (12) erstreckt, wobei die beiden Trägerelemente (13a, 13b) der Schutzeinrichtung (11) sich gegenüberliegende schlitzförmige Öffnungen (15) aufweisen, durch die der erste Schutzschild (12) geführt ist und über die der erste Schutzschild (12) unter Ausbildung eines Spaltes (7) zwischen seiner Flächenseite und der Mantelfläche der Tragrolle gehalten ist.

8. Gurtbandförderer nach einem der vorstehenden Ansprüche, **dadurch gekennzeichnet, dass** die Schutzeinrichtung (11) einen zweiten Schutzschild (32) aufweist, der zwischen den beiden sich gegenüberliegenden Trägerelementen (13a, 13b) angeordnet ist, wobei die Tragrolle (4) zwischen dem ersten Schutzschild (12) und dem zweiten Schutzschild (32) angeordnet ist und der zweite Schutzschild (32) spiegelsymmetrisch, bezogen auf eine Symmetrieebene (B), die sich orthogonal zur Flächenseite (2u) des Gurtbandes (2) erstreckt und auf der die Drehachse (A) der Tragrolle (4) liegt, ausgebildet ist.

9. Gurtbandförderer nach Anspruch 8, **dadurch gekennzeichnet, dass** zwischen der Unterkante (12b) des ersten Schutzschildes (12) und der Unterkante (32b) des zweiten Schutzschildes (32) ein Spalt (39) ausgebildet ist.

10. Gurtbandförderer nach Anspruch 8 oder Anspruch 9, **dadurch gekennzeichnet, dass** die beiden Trägerelemente (13a, 13b) der Schutzeinrichtung (11) sich gegenüberliegende schlitzförmige Öffnungen (35) aufweisen, durch die der zweite Schutzschild (32) geführt ist und über die der zweite Schutzschild (32) unter Ausbildung eines Spaltes (7') zwischen seiner Flächenseite (32c) und der Mantelfläche der Tragrolle (4) gehalten ist.

11. Gurtbandförderer nach einem der vorstehenden Ansprüche, **dadurch gekennzeichnet, dass** der erste Schutzschild (12) und/oder der zweite Schutzschild (32) aus einem Material bestehen, das eine Dichte aufweist, die in einem Bereich von 0,8 g/cm³ bis 5 kg/cm³ liegt.

12. Gurtbandförderer nach einem der vorstehenden Ansprüche, **dadurch gekennzeichnet, dass** der erste Schutzschild (12) und/oder der zweite Schutzschild (32) aus Kunststoff bestehen.

13. Gurtbandförderer nach einem der vorstehenden Ansprüche, **dadurch gekennzeichnet, dass** der erste Schutzschild (12) und/oder der zweite Schutzschild (32) eine Gummilippe (21) aufweisen, die an der Oberkante (12a) des ersten Schutzschildes (12) bzw. an der Oberkante (32a) des zweiten Schutzschildes (32) angeordnet ist.

14. Schutzeinrichtung für eine Tragrolle (4) eines Gurtbandförderers (1), wobei die Schutzeinrichtung (11) einen Schutzschild (12), der als erster Schutzschild bezeichnet wird, und zwei sich gegenüberliegende Trägerelemente (13a, 13b) zur Befestigung an dem Gurtbandförderer (1) aufweist, wobei die beiden Trägerelemente (13a, 13b) der Schutzeinrichtung (11) sich gegenüberliegende schlitzförmige Öffnungen (15) zur Durchführung des ersten Schutzschildes (12) aufweisen.

15. Schutzeinrichtung nach Anspruch 14, **dadurch gekennzeichnet, dass** sie einen zweiten Schutzschild (32) aufweist, wobei die Trägerelemente (13a, 13b) zwei weitere sich gegenüberliegende schlitzförmige Öffnungen (35) zur Durchführung des zweiten Schutzschildes (32) aufweisen.
